# EUROPEAN PATENT APPLICATION

(11) **EP 4 268 980 A1**
(43) Date of publication of application: **01.11.2023**
(21) Application number: 21910494.0
(22) Date of filing: 14.12.2021
(51) Int. Cl.: B05D 7/24, B32B 27/00, C09J 11/06, C09J 183/05, C09J 183/07, C09J 7/38, B32B 7/12

(54) **SILICONE ADHESIVE COMPOSITION AND USE THEREOF**

(30) Priority: 25.12.2020 JP 2020216896
(71) Applicant: Dow Toray Co., Ltd., Tokyo 140-8617 (JP)
(72) Inventor: ONODERA, Satoshi, Ichihara-shi Chiba 299-0108 (JP); NIKI, Harumi, Ichihara-shi Chiba 299-0108 (JP); IIMURA, Tomohiro, Ichihara-shi Chiba 299-0108 (JP)
(74) Representative: Murgitroyd & Company
(86) International application number: PCT/JP2021/046138
(87) International publication number: WO 2022/138345

(57) **Abstract**

To provide: a composition with a viscosity in which coating is possible even with a small amount of solvent, has excellent curability, and in which an Si-based pressure-sensitive adhesive formed by a curing reaction has a low glass transition temperature (Tg) despite having high pressure-sensitive adhesive strength and tack, has favorable wettability, and has favorable mechanical strength and elongation; and an application of the same.

[Resolution Means]

Low/solvent-free silicone pressure-sensitive adhesive composition, comprising (A) a chain organopolysiloxane having an aliphatic unsaturated carbon-carbon bond-containing group only on a molecular chain end, (B) a straight-chain organohydrogenpolysiloxane having Si-H only on both ends, (C) an organopolysiloxane resin with a weight average molecular weight that is less than 5000, (D) an organopolysiloxane having one or more aliphatic unsaturated carbon-carbon bond-containing groups at locations other than an end and three or more in a molecule, and (E) a hydrosilylation-reaction catalyst, wherein the glass transition temperature (Tg) of a pressure-sensitive adhesive layer of 50°C or lower; and a use of the same.

## Description

### [TECHNICAL FIELD]

The present invention relates to a low solvent-type silicone pressure-sensitive adhesive composition. The present invention also relates to applications such as an adhesive layer or elastic pressure-sensitive adhesive member obtained by curing the composition, a laminate body including an adhesive layer obtained by curing the composition, and the like.

### [BACKGROUND ART]

Silicone-based pressure-sensitive adhesive compositions are superior to acrylic and rubber pressure-sensitive adhesive compositions with regards to electrical insulation, heat resistance, cold resistance, pressure-sensitive adhesion to various adherends, and transparency if necessary, and quickly cure when left at room temperature or by heating without generating a byproduct. Therefore, addition reaction curing type pressure-sensitive adhesive compositions in particular are widely used. Particularly in recent years, the demand for silicone-based optically transparent pressure-sensitive adhesives (Optically Clear Adhesive, hereinafter referred to as "OCA") has expanded in material development. Silicone-based OCAs have sufficient pressure-sensitive adhesive strength for practical use, are flexible and deformable, have excellent heat resistance, cold resistance, and light resistance, do not cause problems with coloring or discoloration of an OCA layer, and have little change in physical properties such as pressure-sensitive adhesive strength, storage elastic modulus (for example, shear storage elastic modulus G'), hardness of the OCA layer, and the like. Therefore, in recent years, applications thereof to advanced electronics materials such as smart devices and the like and in the field of display elements have been considered. Such a device assumes a structure in which a film made of a plurality of layers, including an electrode layer and a display layer, is sandwiched between transparent substrates, with a silicone-based pressure-sensitive adhesive having excellent heat resistance and cold resistance expected to work effectively for the purpose of protecting the electrode layer and the display layer and improving adhesion between layers.

On the other hand, silicone-based pressure-sensitive adhesive compositions are generally commercialized after being dissolved in organic solvents, and thus applications thereof have been limited. Particularly in recent years, development of solvent-free polysiloxane-based pressure-sensitive adhesives has been strongly desired due to the direction of environmental regulations around the world. For example, Patent Documents 1 to 4 disclose solvent-free polysiloxane-based pressure-sensitive adhesives, but compared to solvent-type polysiloxane-based pressure-sensitive adhesives, improvements were desired from the perspective of mechanical strength and elongation of the pressure-sensitive adhesives themselves.

In Patent Documents 5 and 6, the present applicants proposed inventions that solve the problems above, but there was still room for improvement. In particular, in the invention of the earlier Patent Document 6, the glass transition temperature of the cured silicone-based pressure-sensitive adhesive is high when the pressure-sensitive adhesive strength is designed to be high, and applicable applications are very limited. Thus, further improvement is desired.

### [PRIOR ART DOCUMENTS]

### [PATENT DOCUMENTS]

Patent Document 1: Japanese PCT Application H6-84494
Patent Document 2: Japanese Unexamined Patent Application 2006-160923
Patent Document 3: Japanese Patent No. 5130995
Patent Document 4: Japanese Unexamined Patent Application 2012-41505
Patent Document 5: International Patent Publication WO 2020/121939
Patent Document 6: International Patent Publication WO 2020/121930

### [SUMMARY OF THE INVENTION]

### [PROBLEM TO BE SOLVED BY THE INVENTION]

An object of the present invention is to provide a curing-reactive organopolysiloxane composition with a viscosity in which coating is possible even with a small amount of solvent, that has excellent curability, and in which a polyorganosiloxane pressure-sensitive adhesive formed by a curing reaction has a low glass transition temperature (Tg) despite having high pressure-sensitive adhesive strength and tack, that has favorable wettability, and has favorable mechanical strength and elongation. Furthermore, an object of the present invention is to provide a use of the curing-reactive silicone pressure-sensitive adhesive composition or cured product thereof as a pressure-sensitive adhesive layer, as an elastic pressure-sensitive adhesive member in a wide range of applications, and as devices or apparatuses provided therewith.

### [MEANS FOR SOLVING THE PROBLEM]

As a result of conducting diligent research on the problem described above, the present inventors arrived at the present invention. In other words, one object of the present invention is achieved by a silicone pressure-sensitive adhesive composition, containing: (A) a straight-chain or branched-chain organopolysiloxane having at least two aliphatic unsaturated carbon-carbon bond-containing groups only at the ends of a molecular chain and a degree of siloxane polymerization within a range of 5 to 10,000; (B) a straight-chain organohydrogenpolysiloxane having silicon-bonded hydrogen atoms only at both ends of a molecular chain; (C) an organopolysiloxane resin, where the total amount of hydroxyl groups and hydrolyzable groups with regard to all silicon atoms in a molecule is 9 mol% or less, and the weight average molecular weight (Mw) measured as calculated based on polystyrene by gel permeation chromatography (GPC) using tetrahydrofuran (THF) as a solvent is less than 5000; (D) an organopolysiloxane having at least one or more aliphatic unsaturated carbon-carbon bond-containing groups at locations other than ends of a molecular chain of the straight-chain or branched-chain siloxane, and having at least three or more aliphatic unsaturated carbon-carbon bond groups in a molecule; and (E) a hydrosilylation-reaction catalyst, wherein the amount of organic solvent with respect to the entire composition is less than 20 mass%, and
the glass transition temperature (Tg) of a pressure-sensitive adhesive layer obtained by curing the composition is 50°C or lower. Furthermore, the problems described above can be solved by the use of silicone pressure-sensitive adhesive composition or a cured product thereof as a pressure-sensitive adhesive layer, the use of the same as an electronic material or a member for a display device, and an electronic part or a display device provided with the same.

### [EFFECTS OF THE INVENTION]

The silicone pressure-sensitive adhesive composition of the present invention has a viscosity that enables coating even with a small amount of solvent, has excellent curability by a hydrosilylation reaction, has a low glass transition temperature despite having sufficient adhesive strength and tack for practical use by curing, has excellent mechanical strength and elongation of the adhesive layer after curing, and can form a pressure-sensitive adhesive layer having sufficient adhesion for practical use. Furthermore, the cured product of the silicone pressure-sensitive adhesive composition can be suitably used as a pressure-sensitive adhesive layer, an electronic material, or a member for a display device, and an electrical or electronic part or a display device provided with the silicone pressure-sensitive adhesive composition can form a pressure-sensitive adhesive layer that does not cause close adhesion problems to a substrate of an electronic part and the like in a temperature region including from a low temperature to room temperature, as the adhesive layer has sufficient viscoelasticity over a wide range of temperatures, and thus has the advantage that producibility of the electronic part or the like is easy and improvement in the performance of the obtained electronic part or the like is anticipated.

### [MODE FOR CARRYING OUT THE INVENTION]

### [SILICONE PRESSURE-SENSITIVE ADHESIVE COMPOSITION]

First, the silicone pressure-sensitive adhesive composition according to the present invention will be described. The composition cures quickly by a curing reaction including a hydrosilylation reaction, and forms a pressure-sensitive adhesive layer having sufficient pressure-sensitive adhesive force for practical use and a pressure-sensitive adhesive layer having excellent mechanical strength and elongation. Each component thereof, the range of organopolysiloxane that is a technical feature, the mass ratio of organopolysiloxane resin relative to its chain organopolysiloxane, and the properties of the pressure-sensitive adhesive layer are described below.

Specifically, the silicone pressure-sensitive adhesive composition of the present invention contains:
(A) a straight-chain or branched-chain organopolysiloxane having at least two aliphatic unsaturated carbon-carbon bond-containing groups only at the ends of a molecular chain and a degree of siloxane polymerization within a range of 5 to 10,000;
(B) a straight-chain organohydrogenpolysiloxane having silicon-bonded hydrogen atoms only at both ends of a molecular chain;
(C) an organopolysiloxane resin, where the total amount of hydroxyl groups and hydrolyzable groups with regard to all silicon atoms in a molecule is 9 mol% or less, and the weight average molecular weight (Mw) measured as calculated based on polystyrene by gel permeation chromatography (GPC) using tetrahydrofuran (THF) as a solvent is less than 5000;
(D) an organopolysiloxane having at least one or more aliphatic unsaturated carbon-carbon bond-containing groups at locations other than the ends of a molecular chain of the straight-chain or branched-chain siloxane, and having at least three or more aliphatic unsaturated carbon-carbon bond groups in a molecule; and
(E) a hydrosilylation-reaction catalyst, wherein the amount of organic solvent is less than 20 mass% with respect to the entire composition, and
   from the perspective of handling workability may further contain (F) a curing retarder, if necessary, as well as
   another additive within a scope that does not impair an object of the present invention.
Hereinafter, each component will be described.

### [Component (A)]

Component (A) is a straight-chain or branched-chain organopolysiloxane having at least two aliphatic unsaturated carbon-carbon bond-containing groups only at the ends of a molecular chain and a degree of siloxane polymerization in the range of 5 to 10,000, and is the main agent (base polymer) of this composition. Component (A) forms a structure in which the molecular chain length is stretched by a chain lengthening reaction with component (B) in the hydrosilylation reaction, and is a component that improves the elongation and flexibility of the curing reactant (pressure-sensitive adhesive layer). By using a specific amount of such a component (A) together with component (B), a structure with a stretched molecular chain length is included at or above a certain level in the curing reactant obtained by curing the composition, and the adhesiveness and high temperature retention as an elastic pressure-sensitive adhesive member are remarkably improved. Herein, the high temperature retention of the pressure-sensitive adhesive refers to a property that allows the adhesive to maintain its adhesive strength even at high temperatures without shifting the adhesion position between the substrates or separating the two substrates when two substrates are adhered using the pressure-sensitive adhesive. Furthermore, the degree of siloxane polymerization of component (A) is not so large by itself, and therefore, the overall viscosity of the composition can be reduced, the amount of organic solvent used can be reduced to a minimum, and even then sufficient practical coatability can be achieved. In other words, even without the use of high molecular weight and high viscosity gum-like curing-reactive organopolysiloxane, a cured material can have excellent adhesiveness and high temperature retention as an elastic pressure-sensitive adhesive member of the cured product, and the coatability thereof can be improved with almost no use of organic solvents. Such a component (A) may be a single organopolysiloxane or a mixture of two or more organopolysiloxanes.

The degree of siloxane polymerization of such organopolysiloxane, which is such component (A), is within a range of 5 to 10,000, preferably within a range of 5 to 1,000, and more preferably within a range of 5 to 500. If the degree of siloxane polymerization of component (A) exceeds the upper limit described above, the viscosity of the entire composition tends to increase, and coating may become difficult unless a large amount of organic solvent is used. On the other hand, if the degree of siloxane polymerization of component (A) is less than the lower limit described above, the curability and pressure-sensitive adhesive performance of the composition may be degraded. From the perspective of the technical effect of the present invention, 50 mass% or more of component (A) is preferably an organopolysiloxane having a degree of siloxane polymerization of at least 5 or higher, which has the advantage of reducing the overall viscosity of the composition.

The organopolysiloxane, which is component (A), has at least two aliphatic unsaturated carbon-carbon bond-containing groups only at the ends of a molecular chain in order to extend the molecular chain length by a chain lengthening reaction. Examples of such aliphatic unsaturated carbon-carbon bond-containing groups include an alkenyl group, an alkenyloxyalkyl group, an acryloxyalkyl group or a methacryloxyalkyl group, and an alkenyl group is particularly preferred. Specifically, the alkenyl group is a vinyl group, an allyl group, a propenyl group, a butenyl group, a pentenyl group, a hexenyl group, and the like, and the vinyl group or the hexenyl group are particularly preferred. These aliphatic unsaturated carbon-carbon bond-containing groups are also preferably bonded to silicon atoms.

The amount of the aliphatic unsaturated carbon-carbon bond-containing groups is preferably 0.001 to 10 mass% with respect to the mass of component (A), preferably 0.005 to 8.5 mass%, and more preferably 0.01 to 7.5 mass%. In particular, the amount of the vinyl (CH₂ = CH-) moieties in the aliphatic unsaturated carbon-carbon bond-containing group (hereinafter, referred to as the "amount of vinyl") is preferably within a range of 0.005 to 10.0 mass%, and particularly preferably within a range of 0.005 to 8.5 mass%.

Component (A) may contain: an alkyl group; an aryl group; an aralkyl group; an alkyl halide group; or the like as an organic group other than the aliphatic unsaturated carbon-carbon bond-containing group. From an industrial perspective, a methyl group or phenyl group is particularly preferably included.

Such a component (A) is preferably a straight-chain organopolysiloxane expressed by the general formula: R^{a}₃SiO(R¹₂SiO_{2/2})ₘ₁SiR^{a}₃
However, component (A) may contain, in part, units selected from a group consisting of branched siloxane units expressed by R¹SiO_{3/2} and branched siloxane units expressed by SiO_{4/2} in an average range of 0 to 5 units per molecule, and thus may be a branched-chain organopolysiloxane.

In the formula, each R¹ is independently exemplified by an organic group other than an aliphatic unsaturated carbon-carbon bond-containing group. In addition, R^{a} represents an aliphatic unsaturated carbon-carbon bond-containing group or R¹, and at least two R^{a} in one molecule represent aliphatic unsaturated carbon-carbon bond-containing groups, preferably alkenyl groups, more preferably vinyl groups or hexenyl groups. The degree of siloxane polymerization, which is "m1+2" in the formula, is preferably a number in the range of 5 to 950, more preferably a number in the range of 5 to 800, and particularly preferably a number in the range of 5 to 750. Note that the "+2" is the sum of the siloxane units at both ends of the straight-chain molecule and may also include, in the range of 0 to 5 units, units selected from branched siloxane units expressed by R¹SiO_{3/2} and branched siloxane units expressed by SiO_{4/2}. Note that for the branched siloxane unit expressed by R¹SiO_{3/2}, one R¹₃SiO_{1/2} unit is added to the molecule, and for the branched siloxane unit expressed by SiO_{4/2}, two R¹₃SiO_{1/2} units are added to a molecule to form the molecular chain end corresponding to the branched siloxane unit.

In the above general formula, at least one R^{a} at a first terminal of the R^{a}₃SiO_{1/2} unit represents an aliphatic unsaturated carbon-carbon bond-containing group, and another R^{a} at a second terminal preferably represents an alkyl group or an aryl group, and from an industrial perspective, a methyl group or a phenyl group is particularly preferable.

The properties of component (A) at room temperature are oil-like, and the viscosity of component (A) is preferably 1 mPa-s or more at 25°C. In particular, from the perspective of the coatability of the silicone pressure-sensitive adhesive composition according to the present invention, the viscosity of component (A) is preferably 1 mPa/s or more and 100,000 mPa·s or less at 25°C. On the other hand, at least a part of component (A) may be a raw rubber-like alkenyl group-containing organopolysiloxane having a viscosity at 25°C of 100,000 mPa-s or more, or a plasticity measured in accordance with the method specified in JIS K6249 (the thickness of a spherical sample of 4.2 g at 25°C when a load of 1 kgf is applied for three minutes is read to 1/100 mm, and this value is multiplied by 100) in the range of 50 to 200, preferably in the range of 80 to 180.

Note that from the perspective of preventing contact failure and the like, these alkenyl group-containing organopolysiloxanes preferably have volatile or low molecular weight siloxane oligomers (octamethyltetrasiloxane (D4), decamethylpentasiloxane (D5) and the like) reduced or eliminated. The extent thereof can be designed as desired, but may be less than 1 mass% of the entire component (A) and less than 0.1 mass% for each siloxane oligomer, and may be reduced to near the detection limit in gas chromatography analysis, if necessary.

Component (B) is a straight-chain organohydrogenpolysiloxane having silicon-bonded hydrogen atoms only at both ends of a molecular chain. In the hydrosilylation reaction, it mainly functions as a chain length extender for component (A) and improves the elongation and flexibility of the curing reactant (pressure-sensitive adhesive layer). By using a specific amount of such component (B) relative to the aliphatic unsaturated carbon-carbon bond-containing group in component (A), the curing reactant obtained by curing the composition contains a certain amount or more of a structure in which the molecular chain length is stretched, and the adhesiveness and high temperature retention as an elastic pressure-sensitive adhesive member are remarkably improved.

Such a component (B) may be a polyorganosiloxane containing SiH groups at both ends of a molecular chain as shown in the formula below. 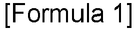 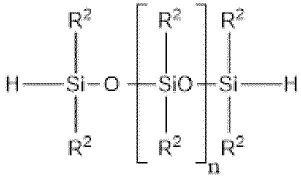 In the formula, R² represents a monovalent hydrocarbon group having 1 to 10 carbon atoms, excluding an alkenyl group. n is a number within a range of 0 to 300 and is preferably a number within a range of 0 to 100. Examples of monovalent hydrocarbon groups having 1 to 10 carbon atoms, bonded to a silicon atom other than an alkenyl group, include alkyl groups; aryl groups; aralkyl groups; alkyl halide groups; and the like. Methyl groups and phenyl groups are particularly preferred.

Specific examples of components (B) include, for example, 1,1,3,3-tetramethyldisiloxane, 1,1,3,3,5,5-hexamethyltrisiloxane, dimethylpolysiloxane capped at both ends of a molecular chain with dimethylhydrogensiloxy groups, a dimethylsiloxane-methylphenylsiloxane copolymer capped at both ends of a molecular chain with dimethylhydrogensiloxy groups, a dimethylsiloxane-diphenylsiloxane copolymer capped at both ends of a molecular chain with dimethylhydrogensiloxy groups, and a mixture of two or more types of these organopolysiloxanes.

Furthermore, examples of such component (B) further include the following organopolysiloxanes. Note that in the formulae, Me and Ph represent a methyl group and a phenyl group, respectively, m2 represents an integer from 1 to 200, and n2 represents an integer from 1 to 50.

HMe₂SiO(Me₂SiO)ₘ₂SiMe₂H

HMe₂SiO(Ph₂SiO)ₘ₂SiMe₂H

HMePhSiO(Ph₂SiO)ₘ₂SiMePhH

HMePhSiO(Ph₂SiO)ₘ₂(MePhSiO)ₙ₂SiMePhH

HMePhSiO(Ph₂SiO)ₘ₂(Me₂SiO)ₙ₂SiMePhH

Note that in these components (B), it is preferable that volatile or low molecular weight siloxane oligomers (octamethyltetrasiloxane (D4), decamethylpentasiloxane (D5), and the like) are preferably reduced or removed from the perspective of preventing contact failure. The extent thereof can be designed as desired, but may be less than 1 mass% of the entire component (B) and less than 0.1 mass% for each siloxane oligomer, and may be reduced to near the detection limit, if necessary.

Although the amount of the silicon-bonded hydrogen atom in component (B) described above is not particularly limited, from the perspective of the technical effect of the present invention, the amount of H in the SiH group is preferably within a range of 0.01 to 3.0 mass%, and particularly preferably within a range of 0.05 to 2.00 mass%.

### [Component (C)]

Component (C) is an organopolysiloxane resin in which the total amount of hydroxyl groups and hydrolyzable groups with respect to all silicon atoms in a molecule is 9 mol% or less and the weight average molecular weight (Mw) measured as calculated based on polystyrene by gel permeation chromatography (GPC) using tetrahydrofuran (THF) as a solvent is less than 5000, and is a component that imparts pressure-sensitive adhesion to a substrate. The pressure-sensitive adhesive force and pressure-sensitive adhesion capabilities of a cured product of this composition can be adjusted from low pressure-sensitive adhesion to high pressure-sensitive adhesion by the amount of the component used. The weight average molecular weight of component (C) is preferably within a range of 500 to 4900, and particularly preferably within a range of 200 to 4850.

Component (C) is an organopolysiloxane resin containing in a molecule (a) a siloxane unit (M unit) as expressed by R₃SiO_{1/2} (where R mutually independently represents a monovalent organic group) and (b) a siloxane unit (Q unit) as expressed by SiO_{4/2}. The molar ratio of M units to Q units is preferably 0.5 to 2.0 (M units/Q units). This is because when the molar ratio is less than 0.5, the pressure-sensitive adhesive force to the substrate may be reduced, whereas when the molar ratio is greater than 2.0, the cohesive strength of a material configuring a pressure-sensitive adhesive layer decreases.

In particular, the molar ratio of (a) M units to (b) Q units is preferably within a range of M units:Q units = 0.50:1.00 to 1.50:1.00, more preferably within a range of 0.55:1.00 to 1.20:1.00, and even more preferably within a range of 0.60:1.00 to 1.10:1.00. The molar ratio can be easily measured by ²⁹Si nuclear magnetic resonance.

Component (C) is preferably an organopolysiloxane resin as expressed by general unit formula: (R₃SiO_{1/2})ₐ(SiO_{4/2})_{b} (where R mutually independently represents a monovalent organic group, a and b are positive numbers, respectively, and a + b = 1 and a / b = 0.5 to 1.5).

Component (C) may contain only (a) M units and (b) Q units, including the MVi units described above, but may also include R₂SiO_{2/2} units (D units) and/or RSiO_{3/2} units (T units). Note that in the formula, R mutually independently represents a monovalent organic group. The total amount of (a) M units and (b) Q units in component (C) is preferably 50 weight% or more, more preferably 80 weight% or more, and particularly preferably 100 weight%.

Although the monovalent organic group is not particularly limited, in relation to component (D), it is preferably an aliphatic unsaturated carbon-carbon bond-non-containing group. In particular, component (C) preferably does not contain a hydrosilylation-reactive functional group in a molecule, and particularly preferably is (C1) an organopolysiloxane resin in which the amount of vinyl (CH₂=CH-) moieties in the aliphatic unsaturated carbon-carbon bond-containing group in a molecule is at least less than 0.1 mass%.

Aliphatic unsaturated carbon-carbon bond-non-containing groups include monovalent saturated hydrocarbon groups and oxygen atom-containing monovalent saturated hydrocarbon groups.

A monovalent saturated hydrocarbon group is, for example, a substituted or unsubstituted, monovalent saturated hydrocarbon group having 1 to 12 carbon atoms, preferably 1 to 8 carbon atoms, and more preferably having from 1 to 6 carbon atoms.

Examples of unsubstituted monovalent saturated hydrocarbon groups having 1 to 12 carbon atoms include: alkyl groups; cycloalkyl groups; aryl groups; and aralkyl groups. Examples of substituted monovalent saturated hydrocarbon groups having 1 to 12 carbon atoms include those in which a portion of the hydrogen atoms of the monovalent unsaturated hydrocarbon groups are substituted by a halogen atom (fluorine, chlorine, bromine or iodine) or the like.

The monovalent saturated hydrocarbon group is preferably a substituted or unsubstituted alkyl group having 1 to 12 carbon atoms. Methyl groups are preferable as the substituted or unsubstituted alkyl groups having 1 to 12 carbon atoms.

Examples of oxygen atom-containing monovalent saturated hydrocarbon groups include substituted or unsubstituted oxygen atom-containing monovalent saturated hydrocarbon groups having 1 to 12 carbon atoms.

Examples of substituted or unsubstituted oxygen atom-containing monovalent saturated hydrocarbon groups having 1 to 12 carbon atoms, include alkoxy groups having 1 to 12 carbon atoms and the like.

Examples of alkoxy groups having 1 to 12 carbon atoms include methoxy groups, ethoxy groups, propoxy groups, butoxy groups, isopropoxy groups, and the like.

### [Reduction of Hydroxyl Groups or Hydrolyzable Groups]

Hydrolyzable groups such as a hydroxyl group or alkoxy group in component (C) are directly bonded to silicon atoms such as T units, Q units, or the like of the siloxane units in the resin structure, and are groups derived from the silane used as a raw material or generated as a result of hydrolysis of the silane. The amount of hydroxyl groups or hydrolyzable groups can be reduced by hydrolyzing the synthesized organopolysiloxane resin with a silylating agent such as trimethylsilane. This may suppress the formation of an organopolysiloxane resin structure having a large molecular weight in the cured product, and further improve the low-temperature curability of the composition and the storage elastic modulus of the resulting pressure-sensitive adhesive layer.

In the present invention, component (C) is an organopolysiloxane resin expressed by the general unit formula: (R₃SiO_{1/2})a(SiO_{4/2})_{b} (where R mutually independently represents a monovalent saturated organic group, and a and b are positive numbers, respectively, where a + b = 1 and a/b = 0.5 to 1.5). 90 mol% or more of R preferably independently represent an alkyl group or a phenyl group having 1 to 6 carbon atoms, 95 to 100 mole% of R particularly preferably independently represent a methyl group or a phenyl group, and most preferably, component (C) is a resin (also called a MQ resin) where the amount of hydroxyl groups or hydrolyzable groups in component (C) is most preferably within a range of 0 to 7 mol% with regard to all silicon atoms (0.0 to 1.50 mass% as a hydroxyl group).

Examples of such a component (C) can include:

(Me₃SiO_{1/2})_{0.45}(SiO_{4/2})_{0.55}(HO_{1/2})_{0.05}

(Me₃SiO_{1/2})_{0.40}(SiO_{4/2})_{0.60}(H_{1/2})_{0.10}

(Me₃SiO_{1/2})_{0.52}(SiO_{4/2})_{0.48}(HO_{1/2})_{0.01}

(Me₃SiO_{1/2})_{0.45}(SiO_{4/2})_{0.55}(MeO_{1/2})_{0.10}

(Me₃SiO_{1/2})_{0.25}(Me₂PhSiO_{1/2})_{0.20}(SiO_{4/2})_{0.55}(HO_{1/2})_{0.05}

(Me₃SiO_{1/2})_{0.40}(Me₂SiO_{2/2})_{0.05}(SiO_{4/2})_{0.55}(HO_{1/2})_{0.05}

(Me₃SiO_{1/2})_{0.40}(MeSiO_{3/2})_{0.05}(SiO_{4/2})_{0.55}(HO_{1/2})_{0.05}

(Me₃SiO_{1/2})_{0.40}(Me₂SiO_{2/2})_{0.05}(MeSiO_{3/2})_{0.05}(SiO_{4/2})_{0.50}(HO_{1/2})_{0.05}

(Me: methyl group, Ph: phenyl group, MeO: methoxy group, HO: silicon atom-bonded hydroxyl group.

Note that in order to express the relative amount of hydroxyl groups to silicon atoms, the total amount of the subscripts of units containing a silicon atom is set to 1, and the subscript of the (HO)_{1/2} unit indicates the relative amount). Note that from the perspective of contact failure or the like, the low molecular weight siloxane oligomer in component (C) may be reduced or removed.

Component (C) is a component that imparts pressure-sensitive adhesive strength to the silicone pressure-sensitive adhesive composition of the present invention, and therefore, the added amount thereof is preferably within a range of 10 to 80 parts by mass when the sum of the mass of components (A) to (D) of the composition is 100 parts by mass. If the added amount of component (C) is less than the lower limit described above, the silicone pressure-sensitive adhesive composition of the present invention may not have sufficient pressure-sensitive adhesive strength. On the other hand, if the added amount of component (C) exceeds the upper limit, the silicone pressure-sensitive adhesive composition of the present invention becomes too hard and may be particularly unsuitable for use as a pressure-sensitive adhesive material. However, if a composition design of only a small amount of pressure-sensitive adhesion is required, the content of component (C) may be suppressed to 10 parts by mass or less.

### [Component (D)]

Component (D) differs from component (A) in that it is an organopolysiloxane having at least one or more aliphatic unsaturated carbon-carbon bond-containing groups at locations other than the molecular chain end of the straight-chain or branched-chain siloxane, and at least three or more aliphatic unsaturated carbon-carbon bond-containing groups in a molecule and is a component that functions as a crosslinking agent with component (B) in the hydrosilylation reaction and the amount added controls the hardness of the cured product. By using such a component (D) in a certain quantitative range, the curing reactivity of the entire composition can be improved to achieve favorable curing properties and suitable hardness (crosslinking density), and the pressure-sensitive adhesive strength of the cured product and the surface tack after curing can be designed to be in a favorable practical range.

The aliphatic unsaturated carbon-carbon bond-containing group in component (D) is the same group as described above, of which examples include an alkenyl group, an alkenyloxyalkyl group, an acryloxyalkyl group, or a methacryloxyalkyl group, with the alkenyl group being particularly preferable. Specifically, the alkenyl group is particularly preferably a vinyl group or hexenyl group. These aliphatic unsaturated carbon-carbon bond-containing groups are also preferably bonded to silicon atoms.

Such a component (D) is selected from:
(D1) a straight-chain or branched-chain organopolysiloxane having at least three aliphatic unsaturated carbon-carbon bond-containing groups at a molecular side chain and a degree of siloxane polymerization within a range of 5 to 5,000;
(D2) an organopolysiloxane resin that at least contains in a molecule a siloxane unit (MVi unit) expressed by (Alk) R'₂SiO_{1/2} (where Alk independently represents an aliphatic unsaturated carbon-carbon bond-containing group and R' independently represents an aliphatic unsaturated carbon-carbon bond-non-containing group) and a siloxane unit (Q unit) expressed by SiO_{4/2}, and in which the amount of vinyl (CH₂ = CH-) moieties in the aliphatic unsaturated carbon-carbon bond-containing group in the molecule is 0.1 mass% or more; and mixtures thereof.

Component (D1) is an organopolysiloxane having a chain-like polysiloxane structure, which may be partially branched, and having at least three aliphatic unsaturated carbon-carbon bond-containing groups at side chain locations thereof. Particularly preferable are straight-chain or branched-chain diorganopolysiloxanes blocked at both ends of a molecular chain with triorganosiloxy groups, where there are at least 3 alkenyl groups at the side chain locations. In addition, the molecular chain end structure of component (D1) is not particularly limited, but may be blocked with a non-reactive trialkylsiloxy group or triarylsiloxy group, and at least one of the silicon atom-bonded organic groups in the triorganosiloxy group at both ends may be an aliphatic unsaturated carbon-carbon bond-containing group, and suitably an alkenyl group. The aliphatic unsaturated carbon-carbon bond-containing groups at the side chain location and at the end of a molecular chain may be of different types. For example, a straight-chain or branched-chain diorganopolysiloxane having a hexenyl group in a molecular side chain and a vinyl group at a molecular chain end is encompassed in the form of a suitable component (D1) of the present invention.

Such a component (D1) is preferably a straight-chain organopolysiloxane expressed by the general formula: R^{b}₃SiO(R¹₂SiO)ₘ₃(R¹R³SiO)ₘ₄SiR^{b}₃.
However, component (D1) may contain a range of 0 to 5 branched siloxane units as expressed by R¹SiO_{3/2} or SiO_{4/2} in a portion, and may be a branched-chain organopolysiloxane.

In the formula, each R¹ is independently exemplified by an organic group other than an aliphatic unsaturated carbon-carbon bond-containing group, and each R³ is independently exemplified by an aliphatic unsaturated carbon-carbon bond containing group. In addition, the end group R^{b} is R³ or R¹. In the formula, m3 is a number of 0 or higher, m4 is a number of 3 or higher, and the degree of siloxane polymerization, which is "m3 + m4 + 2", is a number within a range of 5 to 5,000, preferably a number within a range of 5 to 2,000, more preferably a number within a range of 5 to 1,900, and particularly preferably a number within a range of 5 to 1,750. Note that "+2" is the sum of the siloxane units at both ends of the straight-chain molecule, and may also include branched siloxane units expressed by R¹SiO_{3/2} or SiO_{4/2} within a range of 0 to 5. Note that for the branched siloxane unit expressed by R¹SiO_{3/2}, one R¹₃SiO_{1/2} unit is added to the molecule, and for the branched siloxane unit expressed by SiO_{4/2}, two R¹₃SiO_{1/2} units are added to a molecule to form the molecular chain end corresponding to the branched siloxane unit.

In the above general formula, R^{b} R^{b}₃SiO_{1/2} units at both ends may both be organic groups other than aliphatic unsaturated carbon-carbon bond-containing groups, at least one of the R^{b} may be an aliphatic unsaturated carbon-carbon bond-containing group, and the other R^{b} may be an organic group other than an aliphatic unsaturated carbon-carbon bond-containing group. From an industrial perspective, the R^{b}₃SiO_{1/2} unit at both ends may be a non-reactive trimethylsiloxy group or triphenylsiloxy group, or an alkenyl group-containing triorganosiloxy group such as a vinyl dimethyl siloxy group or the like.

The properties of component (D1) at room temperature are oil-like or gum-like and may include plasticity, and the viscosity of component (D1) is preferably 1 mPa-s or more at 25°C. In particular, from the perspective of the coatability of the silicone pressure-sensitive adhesive composition according to the present invention, the viscosity of component (D1) is preferably 1 mPa·s or more and 100,000 mPa s or less.

Note that as with component (A), it is preferable that the volatile or low molecular weight siloxane oligomers be reduced or removed from these alkenyl group-containing organopolysiloxanes from the perspective of preventing contact failure and the like.

The organopolysiloxane resin, which is component (D2), differs from component (A) and component (D1) above, in that it has a resinous (network-like) molecular structure, and at least contains in a molecule a siloxane unit (MVi unit) expressed by (Alk) R'₂SiO_{1/2} (where Alk represents mutually independent aliphatic unsaturated carbon-carbon bond-containing groups and R' represents mutually independent aliphatic unsaturated carbon-carbon bond-non-containing groups) and a siloxane unit (Q unit) expressed by SiO_{4/2}. Herein, component (D2) may include a siloxane unit (M unit) expressed by R₃SiO_{1/2} (where R mutually independently represent a monovalent organic group) including the MVi unit, and the molar ratio of the M unit (including the MVi unit) to the Q unit is preferably 0.5 to 2.0.

The aliphatic unsaturated carbon-carbon bond-containing group that is Alk in component (D) is preferably an alkenyl group, an alkenyloxyalkyl group, an acryloxyalkyl group, or a methacryloxyalkyl group as described above. Furthermore, the aliphatic unsaturated carbon-carbon bond-non-containing group, which is R', is preferably an alkyl group, an aryl group, or an aralkyl group, as previously described. Furthermore, a portion of these groups may be substituted by a halogen atom or the like. From an industrial perspective, the aliphatic unsaturated carbon-carbon bond-containing group, which is Alk, is preferably a vinyl group, an allyl group, or a hexenyl group, and the aliphatic unsaturated carbon-carbon bond-non-containing group, which is R', is preferably a methyl group, a phenyl group, or the like.

Component (D2) is a component that is cured by a hydrosilylation reaction. Therefore, the amount of vinyl (CH₂ = CH-) moieties in the aliphatic unsaturated carbon-carbon bond-containing group in a molecule is preferably at least 0.1 mass% or more, more preferably within a range of 0.2 to 10.0 mass%, and particularly preferably within a range of 0.3 to 5.0 mass%.

The molar ratio of M units (including MVi units) to Q units in component (D2) is preferably within a range of M units : Q units = 0.50:1.00 to 1.50:1.00, more preferably within a range of 0.55:1.00 to 1.20:1.00, and even more preferably within a range of 0.60:1.00 to 1.10:1.00. The molar ratio can be easily measured by ²⁹Si nuclear magnetic resonance.

Suitably, the organopolysiloxane resin serving as component (D2) is preferably an organopolysiloxane resin expressed by the general unit formula:

{(Alk)R'₂SiO_{1/2}}ₐ₁(R'₃SiO_{1/2})ₐ₂(SiO_{4/2})_{b}

(where Alk represents an aliphatic unsaturated carbon-carbon bond-containing group, R' represents an aliphatic unsaturated carbon-carbon bond-non-containing group, a1, a2 and b are each positive numbers, a1 + a2 + b = 1, (a1 + a2)/b = 0.5 to 1.5, and a1 is a number at which the amount of the vinyl (CH₂ = CH-) moieties in the aliphatic unsaturated carbon-carbon bond-containing group in the organopolysiloxane resin is at least 0.1 mass% or more).

Component (D2) may contain only M units and Q units, including the MVi units described above, but may also include R₂SiO_{2/2} units (D units) and/or RSiO_{3/2} units (T units). Note that in the formula, R mutually independently represents a monovalent organic group. The total amount of M units and Q units in component (D2) is preferably 50 weight% or more, more preferably 80 weight% or more, and particularly preferably 100 weight%.

[Mass of Aliphatic Unsaturated Carbon-Carbon Bond-Containing Groups in Component (D) in Total Amount of 100 g of Components (A) to (D)]
The composition of the present invention is hydrosilylation-reaction curable, and the mass of the aliphatic unsaturated carbon-carbon bond-containing group in component (D) in a total amount of 100 g of components (A) to (D) in the composition is preferably within a range of 0.001 to 0.030, and particularly preferably within a range of 0.001 to 0.10. An amount of substance less than the lower limit as described above may cause adhesive residue or the like, and at or more than this upper limit may cause insufficient pressure-sensitive adhesive strength.

### [SiH/Vi Ratio in Component (B) Compared to Components (A) and (D)]

In the composition of the present invention, in addition to the SiH/Vi ratio of component (B) and component (A), the ratio of the number of mols of silicon-bonded hydrogen atoms in component (B) to the number of mols of aliphatic unsaturated carbon-carbon bond-containing groups such as alkenyl groups and the like in component (A) and component (D) in the entire composition (mass ratio) must be within a range of 0.70 to 1.30, and is particularly preferably within a range of 0.85 to 1.35.

### [Component (E)]

The silicone pressure-sensitive adhesive composition according to the present invention includes a hydrosilylation-reaction catalyst as component (E). Examples of hydrosilylation-reaction catalysts include platinum-based catalysts, rhodium-based catalysts, and palladium-based catalysts, with platinum-based catalysts being preferable in that curing of the composition is remarkably promoted. Examples of this platinum-based catalyst include platinum fine powder, chloroplatinic acid, an alcohol solution of chloroplatinic acid, a platinum-alkenyl siloxane complex, a platinum-olefin complex, and a platinum-carbonyl complex, with a platinum-alkenyl siloxane complex being particularly preferable. In particular, 1,3-divinyl-1,1,3,3-tetramethyldisiloxane is preferably used because of the favorable stability of this platinum-alkenylsiloxane complex, and is preferably added in the form of an alkenylsiloxane solution. In addition, from the perspective of improving handling workability and pot life of the composition, these hydrosilylation-reaction catalysts may be thermoplastic resin microparticles containing a hydrosilylation-reaction catalyst, which are catalysts dispersed or encapsulated in a thermoplastic resin such as a silicone resin, a polycarbonate resin, an acrylic resin, or the like, and particularly may be thermoplastic resin microparticles including a hydrosilylation-reaction catalyst that contains platinum. Note that as the catalyst for promoting the hydrosilylation reaction, a non-platinum-based metal catalyst such as iron, ruthenium, iron/cobalt, or the like may be used.

Furthermore, a hydrosilylation-reaction catalyst that is active upon irradiation with a high-energy beam can also be used as a hydrosilylation catalyst in the present invention. Specific examples include (methylcyclopentadienyl) trimethyl platinum (IV), (cyclopentadienyl) trimethyl platinum (IV), (1,2,3,4,5-pentamethyl cyclopentadienyl) trimethyl platinum (IV), (cyclopentadienyl) dimethylethyl platinum (IV), (cyclopentadienyl) dimethylacetyl platinum (IV), (trimethylsilyl cyclopentadienyl) trimethyl platinum (IV), (methoxycarbonyl cyclopentadienyl) trimethyl platinum (IV), (dimethylsilyl cyclopentadienyl) trimethylcyclopentadienyl platinum (IV), trimethyl (acetylacetonato) platinum (IV), trimethyl (3,5-heptanedionate) platinum (IV), trimethyl (methylacetoacetate) platinum (IV), bis(2,4-pentanedionato) platinum (II), bis(2,4-hexanedionato) platinum (II), bis(2,4-heptanedionato) platinum (II), bis(3,5-heptanedionato) platinum (II), bis(1 - phenyl-1,3-butanedionato) platinum (II), bis(1,3-diphenyl-1,3-propanedionato) platinum (II), and bis(hexafluoroacetylacetonato) platinum (II). Of these, (methylcyclopentadienyl) trimethyl platinum (IV) and bis(2,4-pentanedionato) platinum (II) are preferred from the perspective of versatility and ease of acquisition.

In the present invention, the amount of the hydrosilylation-reaction catalyst is not particularly limited, but the amount of the metal above, particularly the platinum-based metal, is within a range of 0.1 to 200 ppm, and may be within a range of 0.1 to 150 ppm, within a range of 0.1 to 100 ppm, or within a range of 0.1 to 50 ppm, relative to the total amount of solids in the composition. Herein, the platinum-based metal is a metal element of group VIII including platinum, rhodium, palladium, ruthenium, and iridium. However, in practical use, the amount of the platinum-metal excluding the ligands of the hydrosilylation-reaction catalyst is preferably within the range described above. Note that the solids refers to the components that form the cured layer when the silicone pressure-sensitive adhesive composition according to the present invention is subjected to a curing reaction (primarily the main agent, adhesion-imparting components, crosslinking agents, catalysts and other nonvolatile components), and does not include volatile components such as solvents and the like that volatilize during and possibly after heat curing.

If the amount of a metal, preferably a platinum-based metal, in the silicone pressure-sensitive adhesive composition according to the present invention is 50 ppm or less (45 ppm or less, 35 ppm or less, 30 ppm or less, 25 ppm or less, or 20 ppm or less), it may be possible to suppress discoloration or coloring of the transparent pressure-sensitive adhesive layer, particularly after curing or exposure to heat, ultraviolet rays, or the like. On the other hand, from the perspective of the curability of the organopolysiloxane composition, the amount of the metal, and preferably the platinum-based metal, is 0.1 ppm or more, and an amount below this lower limit may cause curing defects.

### [Component (F)]

Component (F) is a curing retarder, which is added to inhibit a crosslinking reaction between the aliphatic unsaturated carbon-carbon bond-containing groups and the silicon-bonded hydrogen atoms in the composition, to extend usable time at ambient temperature, and to improve storage stability. A curing retarder is preferably used when desired to increase the usable time of the curable silicone pressure-sensitive adhesive composition of the present invention. In particular, for practical purposes, a curing retarder is preferably used in the silicone pressure-sensitive adhesive composition of the present invention.

Specific examples of component (F) include acetylenic compounds, enyne compounds, organic nitrogen compounds, organic phosphorus compounds, and oxime compounds. Specific examples include: 3-methyl-1-butyne-3-ol, 3,5-dimethyl-1-hexyne-3-ol, 3-methyl-1-pentyne-3-ol, 1-ethynyl-1-cyclohexanol, phenyl butanol, and other alkyne alcohols; 3-methyl-3-pentene-1-yne, 3,5-dimethyl-1-hexyne-3-yne, and other ene-yne compounds; 2-ethynyl-4-methyl-2-pentene, 1,3,5,7-tetramethyl-1,3,5,7-tetravinylcyclotetrasiloxane, 1,3,5,7-tetramethyl-1,3,5,7-tetrahexenylcyclotetrasiloxane, and other methylalkenylcyclosiloxanes; benzotriazoles; and diallyl maleate, diallyl fumarate, and (tris((1,1-dimethyl-2-propynyl)oxy)methylsilane.

From the perspective of the curing behavior of the composition, the silicone pressure-sensitive adhesive composition of the present invention preferably has an increase in viscosity within 1.5 times after 8 hours at room temperature after preparation of the composition when heat curing, and is preferably curable at 80 to 200°C. On the other hand, in the case of a UV curing type, the viscosity increase after 8 hours at room temperature after the composition is adjusted is preferably within 1.5 times, but post-curing at room temperature to approximately 100°C after UV irradiation is preferred. This property is important from the perspective of handling workability, pot life, and properties after curing. Note that such a composition can be achieved by selecting a suitable combination and compounded amounts of each of the components described above, the hydrosilylation catalyst, and component (F).

### [Viscosity of Entire Composition]

The silicone pressure-sensitive adhesive composition of the present invention has coatability even when the amount of organic solvent is less than 20 mass% of the entire composition. Specifically, the viscosity of the entire composition can and is preferably designed such that the viscosity of the entire composition at 25°C is within a range of 1,000 to 500,000 mPa s.

### [Low Solvent-Type Composition]

The silicone pressure-sensitive adhesive composition according to the present invention is a solvent-free/low solvent-type composition, and the amount of organic solvent may be selected as appropriate in accordance with the desired dosage form and method of use, so long as the amount is less than 20 mass% of the entire composition. In recent years, there has been demand for solvent-free/low solvent-type compositions from the perspective of reducing environmental burden and improving the work environment, and the silicone pressure-sensitive adhesive composition according to the present invention can achieve sufficient coatability for practical use even as a solvent-free/low solvent type.

Each of the components in the present invention is compatible with the design of a solvent-free or low solvent-type composition, and has sufficient coatability even if the amount of organic solvent is less than 20 mass% of the entire composition. Moreover, the amount of organic solvent may be 15 mass% or less or within a range of 0 to 5 mass%. Note that it goes without saying that it is possible to design a solvent-free composition with essentially 0 mass% of organic solvent content. In addition, a small amount of organic solvent may be included if the purpose is to improve the wettability of the composition to the substrate, or if it is inevitable as a solvent associated with each component.

The type and blending amount of the organic solvent is adjusted taking the coating workability and the like into consideration. Examples of organic solvents include a selection of one or more of the following: toluene, xylene, benzene, and other aromatic hydrocarbon-based solvents; heptane, hexane, octane, isoparaffin, and other aliphatic hydrocarbon-based solvents; ethyl acetate, isobutyl acetate, and other ester-based solvents; diisopropyl ether, 1,4-dioxane, and other ether-based solvents; trichloroethylene, perchloroethylene, methylene chloride, and other chlorinated aliphatic hydrocarbon-based solvents; solvent volatile oils; and the like. Two or more types thereof may be combined in accordance with the wettability of the sheet-like substrate or the like.

The silicone pressure-sensitive adhesive composition according to the present invention may optionally contain components other than the components described above within a scope that does not impair the technical effects of the present invention. For example, the composition may contain: an adhesion promoter; a non-reactive organopolysiloxane such as a polydimethylsiloxane or a polydimethyldiphenylsiloxane; an antioxidant such as a phenol-type, a quinone-type, an amine-type, a phosphorus-type, a phosphite-type, a sulfur-type, or a thioether-type antioxidant; a light stabilizer such as triazoles or benzophenones; a flame retardant such as a phosphate ester-type, a halogen-type, a phosphorus-type, or an antimony-type flame retardant; and one or more types of antistatic agents consisting of a cationic surfactant, an anionic surfactant, a non-ionic surfactant, or the like. Note that in addition to these components, pigments, dyes, inorganic microparticles (reinforcing fillers, dielectric fillers, electrically conductive fillers, thermally conductive fillers), and the like can be optionally added.

### [(A') Chain Organopolysiloxane Not Containing Carbon-Carbon Double Bond-Containing Reactive Group in Molecule]

The silicone pressure-sensitive adhesive composition according to the present invention can be blended with a non-reactive organopolysiloxane such as polydimethylsiloxane, polydimethyldiphenylsiloxane, or the like which contains neither a carbon-carbon double bond-containing reactive group such as an alkenyl group, an acrylic group, or a methacrylic group nor a silicon-bonded hydrogen atom, which may improve the loss factor (tanδ), storage elastic modulus (G'), and loss elastic modulus (G") of the pressure-sensitive adhesive layer described later. For example, the loss factor of the pressure-sensitive adhesive layer can be increased using a polydimethylsiloxane or polydimethyldiphenylsiloxane having a hydroxyl group end, with such compositions included within the scope of the present invention.

The method of preparing the silicone pressure-sensitive adhesive composition according to the present invention is not particularly limited and is performed by homogeneously mixing the respective components. A solvent may be added as necessary and the composition may be prepared by mixing at a temperature of 0 to 200°C using a known stirrer or kneader.

The organopolysiloxane composition of the present invention forms a coating film when coated onto a substrate and, when heat cured, forms a cured product by heating under temperature conditions of 80 to 200°C, and preferably under temperature conditions of 90 to 190°C. In the case of a high-energy beam curing type, a method of forming a coating film by coating on a substrate, irradiating with a high-energy beam, and then post-curing at room temperature to approximately 100°C is suitably used. Examples of application methods include gravure coating, offset coating, offset gravure, roller coating, reverse roller coating, air knife coating, curtain coating, and comma coating.

The organopolysiloxane composition of the present invention forms a coating film when coated onto a substrate and, when heat cured, forms a cured product by heating under temperature conditions of 80 to 200°C, and preferably under temperature conditions of 90 to 190°C. In the case of a high-energy beam curing type, a method of forming a coating film by coating on a substrate, irradiating with a high-energy beam, and then post-curing at room temperature to approximately 100°C is suitably used. Examples of application methods include gravure coating, offset coating, offset gravure, roller coating, reverse roller coating, air knife coating, curtain coating, and comma coating.

Examples of high-energy beams include ultraviolet rays, gamma rays, X-rays, alpha rays, electron beams, and the like. In particular, examples include ultraviolet rays, X-rays, and electron beams irradiated from a commercially available electron beam irradiating device. Of these, ultraviolet rays are preferable from the perspective of efficiency of catalyst activation, and ultraviolet rays within a wavelength range of 280 to 380 nm are preferable from the perspective of industrial use. Furthermore, the intensity of irradiation varies depending on the type of the high-energy beam activation catalyst, but in the case of ultraviolet rays, the integrated intensity of irradiation at a wavelength of 365 nm is preferably within a range of 100 mJ/cm² to 10 J/cm².

### [Glass Transition Temperature (Tg) of Pressure-Sensitive Adhesive Layer]

The silicone pressure-sensitive adhesive composition of the present invention is characterized in that a cured product (= pressure-sensitive adhesive layer) obtained by curing the composition by a hydrosilylation reaction has a glass transition temperature (Tg) of 50°C or less, and, if necessary, a pressure-sensitive adhesive layer having a glass transition temperature (Tg) can be and is preferably designed to be within a range of -20°C to 45°C, 0°C to 40°C, or 10°C to 40°C. Note that the glass transition temperature (Tg) of the pressure-sensitive adhesive layer according to the present invention is a value derived from the peak value of a loss factor (tanδ) of the cured product based on a dynamic viscoelasticity measurement test.

### [Range of Pressure-Sensitive Adhesion and Pressure-Sensitive Adhesive Force]

The silicone pressure-sensitive adhesive composition of the present invention is characterized in that the cured layer formed by curing said composition by a hydrosilylation reaction is a pressure-sensitive adhesive. Because the pressure-sensitive adhesive layer according to the present invention has the abovementioned configuration and expresses sufficient pressure-sensitive adhesive force for practical use, a known silicone pressure-sensitive adhesive can be replaced and used as desired.

Specifically, a pressure-sensitive adhesive layer having a pressure-sensitive adhesive force in the range of 100 to 2,500 gf/inch measured at a tensile rate of 300 mm/min using a 180° peel test method in accordance with JIS Z 0237 relative to a SUS substrate of a pressure-sensitive adhesive layer having a thickness of 40 µm made by curing the silicone pressure-sensitive adhesive composition of the present invention can be designed, and a pressure-sensitive adhesive layer in the range of 500 to 2,250 gf/inch is suitable. Note that the thickness (40 µm) described above is the thickness of the cured layer itself serving as a reference for objectively defining the pressure-sensitive adhesive force of the cured layer according to the present invention. It goes without saying that the organopolysiloxane composition of the present invention is not limited to a thickness of 40 µm and may be used as a cured layer or a pressure-sensitive adhesive layer of arbitrary thickness.

### [Use as Pressure-Sensitive Adhesive Layer]

The cured product of the present invention can, in particular, be used as a pressure-sensitive adhesive layer. In addition, in order to improve close adhesion with an adherend, surface treatments such as primer treatment, corona treatment, etching treatment, plasma treatment, and the like may be performed on the surface of the pressure-sensitive adhesive layer or the substrate. However, the pressure-sensitive adhesive layer according to the present invention has excellent close adhesion to a substrate of a display device and the like as described above. Therefore, these steps may be added, as required, to further improve close adhesion with the adherend, with a higher production efficiency capable of being achieved by eliminating these steps.

The silicone pressure-sensitive adhesive composition according to the present invention is cured by applying the composition to a release liner, then heating under the temperature conditions described above, and after the release liner is peeled off and the composition is attached to a film-like substrate, a tape-like substrate, or a sheet-like substrate (hereinafter, referred to as a "film-like substrate") or applied to a film-like substrate, curing by heating at the temperature conditions described above so as to form a pressure-sensitive adhesive layer on the surface of the substrate can be performed. A laminate body provided with a cured layer, in particular, a film-like pressure-sensitive adhesive layer, obtained by curing the organopolysiloxane composition according to the present invention on these film-like substrates may be used for pressure-sensitive adhesive tapes, adhesive bandages, low-temperature supports, transfer films, labels, emblems, and decorative or explanatory signs. Furthermore, a cured layer obtained by curing the organopolysiloxane composition according to the present invention may be used to assemble automobile parts, toys, electronic circuits, or keyboards. Alternatively, a cured layer obtained by curing the organopolysiloxane composition according to the present invention, particularly a film-like pressure-sensitive adhesive layer, may be used in the construction of a laminated touch screen or flat panel display.

Examples of substrate types include: paperboard, cardboard paper, clay-coated papers, polyolefin laminate papers, particularly polyethylene paper laminate, synthetic resin films and sheets, natural fiber woven materials, synthetic fiber woven materials, artificial leather woven materials, and metal foils. In particular, synthetic resin films and sheets are preferable, and examples of synthetic resins include: polyimides, polyethylenes, polypropylenes, polystyrenes, polyvinyl chlorides, polyvinylidene chlorides, polycarbonates, polyethylene terephthalates, cyclopolyolefins, and nylon (registered trademark). When heat resistance is required, a heat-resistant synthetic resin film such as a polyimide, polyetheretherketone, polyethylene naphthalate (PEN), liquid crystal polyacrylate, polyamide-imide, polyether sulfone, and the like is particularly preferable. At the same time, for applications such as a display device in which visibility is required, a transparent substrate and specifically a transparent material such as a polypropylene, polystyrene, polyvinylidene chloride, polycarbonate, polyethylene terephthalate, PEN, and the like is preferable.

The substrate is preferably a film-like or sheet-like substrate. The thickness thereof is not particularly limited and can be designed with a desired thickness in accordance with the application. Furthermore, in order to improve close adhesion between a support film and pressure-sensitive adhesive layer, a support film subjected to a primer treatment, corona treatment, etching treatment, or plasma treatment may be used. Furthermore, the opposite surface of the film-like substrate from the pressure-sensitive adhesive layer surface may be subjected to surface treatments such as a treatment for scratch prevention, grime prevention, fingerprint adhesion prevention, anti-glare, antireflection, anti-static, other treatment, or the like.

As the application method of the silicone pressure-sensitive adhesive composition to the substrate, gravure coating, offset coating, offset gravure, roll coating using an offset transfer roll coater, reverse roll coating, air knife coating, curtain coating using a curtain flow coater or the like, comma coating, Meyer bar, or other known methods used for the purpose of forming a cured layer may be used without limitation.

The coating amount of the silicone pressure-sensitive adhesive composition on the substrate can be designed at a desired thickness in accordance with an application such as a display device or the like. For example, the thickness of the pressure-sensitive adhesive layer after curing may be from 1 to 1,000 µm, from 5 to 900 µm, or from 10 to 800 µm; however, there is no limitation thereto.

The pressure-sensitive adhesive layer according to the present invention may be a single layer or a multilayer structure obtained by laminating two or more pressure-sensitive adhesive layers in accordance with the required properties. The multi-layered pressure-sensitive adhesive layer may be made by laminating pressure-sensitive adhesive films made one layer at a time, or by performing the process of coating and curing the silicone pressure-sensitive adhesive composition a plurality of times, such as on a film substrate having a release layer or the like.

The pressure-sensitive adhesive layer according to the present invention may serve as other functional layers selected from a dielectric layer, electrically conductive layer, heat dissipation layer, insulating layer, reinforcing layer, and the like, in addition to providing adhering or sticking functions between members.

When the cured layer obtained by curing the silicone pressure-sensitive adhesive composition of the present invention is a pressure-sensitive adhesive layer, in particular, a pressure-sensitive adhesive film, the cured layer is preferably treated as a laminate body film that is releasably adhered to a film substrate provided with a release layer having a release coating capability. The release layer may also be referred to as a release liner, separator, release layer, or release coating layer, and is suitably a release layer having a release coating capability such as a silicone-based release agent, fluorine-based release agent, alkyd-based release agent, fluorosilicone-based release agent, or the like. Alternatively, without a release layer, an adhesive layer may be formed on the substrate itself, which has physically formed minute irregularities on the surface of the substrate or on a substrate made of a material that has difficulty adhering to the pressure-sensitive adhesive layer of the present invention. In particular, in the laminate body according to the present invention, a release layer obtained by curing a curable fluorosilicone-based release agent is preferably used as the release layer.

The cured product obtained by curing the silicone pressure-sensitive adhesive composition according to the present invention has both viscoelasticity and adhesive strength as described above, making it useful as a member of various types of electronic apparatuses or electrical devices as an elastic pressure-sensitive adhesive member. In particular, the cured product is useful as an electronic material, a member for a display device, or a member for a transducer (including sensors, speakers, actuators, and generators), and a suitable application for the cured product is as a member of an electronic part or display device. The cured product according to the present invention may be transparent or opaque, wherein, in particular, a film-shaped cured product, particularly a substantially transparent pressure-sensitive adhesive film, is suitable as a member for a display panel or a display, and is particularly useful in so-called touch panel applications in which an apparatus, particularly an electronic apparatus, can be operated by touching a screen with a fingertip or the like. Furthermore, the opaque elastic pressure-sensitive adhesive layer is not required to have transparency, making it particularly useful for applications of film-like or sheet-like members used in sensors, speakers, actuators, or the like which require constant elasticity or flexibility in the pressure-sensitive adhesive layer itself.

### [Use as Pressure-Sensitive Adhesive Tape]

An article containing the pressure-sensitive adhesive containing the silicone pressure-sensitive adhesive composition of the present invention may be a pressure-sensitive adhesive tape, and is provided with a sheet-like member including a synthetic resin film/sheet, metal foil, woven fabric, non-woven fabric, paper or the like, as described above, and the pressure-sensitive adhesive layer described above. The types of such pressure-sensitive adhesive tapes are not particularly limited, and include insulating tapes, heat-resistant tapes, solder masking tapes, mica tape binders, temporary fixing tapes (including in particular temporary fixing tapes for silicone rubber parts, and the like), and splicing tapes (including in particular splicing tapes for silicone release paper)).

In particular, the pressure-sensitive adhesive layer obtained by curing the silicone pressure-sensitive adhesive composition according to the present invention is capable of achieving pressure-sensitive adhesive properties equivalent to conventional silicone pressure-sensitive adhesive layers, and can improve close adhesion to a substrate of a display device and the like without causing problems due to inferior curing or reduced curability.

### [Laminate Body and Pressure-Sensitive Adhesive Sheet]

Next, a laminate body and pressure-sensitive adhesive sheet according to the present invention, which are types of the pressure-sensitive adhesive layer described above, will be described.

The laminate body according to the present invention is a laminate body provided with a pressure-sensitive adhesive layer obtained by curing the silicone pressure-sensitive adhesive composition described above on the film-like substrate described above, and suitably a release layer for said pressure-sensitive adhesive layer is provided on these film-like substrates.

In the laminate body according to the present invention, the sheet-like substrate is preferably provided with at least one release layer, and the release layer is preferably in contact with the pressure-sensitive adhesive layer. This allows the pressure-sensitive adhesive layer to be easily peeled off from the sheet-like substrate. The release agent included in the release layer is not particularly limited, and as above, examples include silicone-based release agents, fluorine-based release agents, alkyd-based release agents, fluorosilicone-based release agents, and the like.

In particular, the laminate body of the present invention may be able to handle the pressure-sensitive adhesive layer separated from the film-like substrate alone, and there may be two film-like substrates.
Specifically, it may be provided with:
a film-like substrate;
a first release layer formed on the film-like substrate;
a pressure-sensitive adhesive layer formed by coating and curing the silicone pressure-sensitive adhesive composition described above on the release layer; and
a second release layer laminated on the pressure-sensitive adhesive layer.

Similarly, the laminate body of the above form may be formed, for example, by coating and curing the silicone pressure-sensitive adhesive composition described above on one of the release layers formed on the film-like substrate to form a pressure-sensitive adhesive layer, and then laminating another release layer on said pressure-sensitive adhesive layer.

The laminate body of the above form may be produced, for example, by sandwiching the silicone pressure-sensitive adhesive composition described above between the first film-like substrate and the second film-like substrate, forming the composition to a certain thickness by pressing or rolling while heating, and then curing the composition.

The first sheet substrate may be provided with a first release layer, or the first sheet substrate itself may be provided with releasability. Similarly, the second sheet substrate may be provided with a second release layer, or the second sheet substrate itself may be provided with releasability. When the first sheet substrate and/or the second sheet substrate is provided with a first release layer and/or a second release layer, the pressure-sensitive adhesive layer is preferably in contact with the first release layer and/or the second release layer.

For example, the sheet substrate having releasability includes a sheet substrate made of a material having releasability such as a fluororesin film or the like, or a sheet substrate made of a material having no or low releasability such as a polyolefin film or the like to which a release agent such as silicone, fluororesin, or the like has been added. On the other hand, the sheet substrate provided with the release layer includes, for example, polyolefin film and the like coated with a release agent such as silicone, fluororesin, or the like.

The laminate body of the present invention can be used, for example, by releasing the pressure-sensitive adhesive layer from the film-like substrate adhered to the adherend after applying the pressure-sensitive adhesive layer to the adherend.

The thickness of the pressure-sensitive adhesive layer is preferably 5 to 10,000 µm, of which 10 µm or more or 8,000 µm or less is preferable, and of which 20 µm or more or 5,000 µm is particularly preferable.

### [Member for Display Panel or Display]

A cured product obtained by curing the silicone pressure-sensitive adhesive composition of the present invention can be used in the construction of a laminated touch screen or flat panel display, with the specific method of use thereof capable of being a known method of use of a pressure-sensitive adhesive layer (in particular, silicone PSA) without any particular limitation.

For example, a cured product obtained by curing the composition of the present invention can be used as an optically transparent silicone-based pressure-sensitive adhesive film or pressure-sensitive adhesive layer as disclosed in the Japanese Unexamined Patent Application Publication No. 2014-522436 or Japanese Unexamined Patent Application Publication No. 2013-512326, or the like, and can be used in the manufacture of display devices such as touch panels. Specifically, the cured product obtained by curing the composition of the present invention can be used as a pressure-sensitive adhesive layer or an pressure-sensitive adhesive film as described in Japanese Unexamined Patent Application Publication No. 2013-512326 without any particular limitation.

As an example, the touch panel according to the present invention may be a touch panel including a substrate such as a conductive plastic film on which an electrically conductive layer is formed on one side, or the like, and a cured layer obtained by curing the composition of the present invention adhered to the side on which the electrically conductive layer is formed or on the opposite side thereof. The substrate is preferably a sheet-like or film-like substrate, with an example thereof being a resin film or a glass plate. The substrate on which the conductive layer is formed may be a resin film or a glass plate, in particular a polyethylene terephthalate film, on which an ITO layer is formed on one surface. These are disclosed in the above-described Japanese Unexamined Patent Application Publication 2013-512326 and the like.

In addition, the cured product obtained by curing the silicone pressure-sensitive adhesive composition of the present invention may be used as an adhesive film for a polarizing plate used in manufacturing a display device such as a touch panel or the like, and may be used for adhering between a touch panel and a display module as described in Japanese Unexamined Patent Application 2013-065009 as a pressure-sensitive adhesive layer.

### [EXAMPLES]

### Examples 1 to 9, Comparative Examples 1 to 2

Examples of the present invention and comparative examples are described hereinafter. Note that "cured" in each of the examples and comparative examples means that each composition has fully cured under the respective curing conditions. Furthermore, Examples 1 to 7 are heat-cured products, while Examples 8 and 9 are cured products obtained by a reaction triggered by UV irradiation using a photoactive hydrosilylation-reaction catalyst.

### (Preparation of a Curing-Reactive Silicone Pressure-Sensitive Adhesive Composition)

Silicone pressure-sensitive adhesive compositions with the curing reactivity shown in each of the examples and comparative examples were prepared using each of the components shown in Table 1 and Table 2. Note that all percentages in the tables refer to mass percentages.

### (Measurement of the molecular weight of the organopolysiloxane component)

Using gel permeation chromatography (GPC) available from Waters and tetrahydrofuran (THF) as a solvent, the weight average molecular weight (Mw) and number average molecular weight (Mn) of organopolysiloxane components such as organopolysiloxane resin and the like were determined by calculation based on polystyrene.

### (Pressure-Sensitive Adhesive Strength Measurement, Film Surface) *Examples 1 to 7

Each composition was applied to a PET film (available from Toray Co., Ltd., product name: Lumirror (registered trademark) S10, thickness: 50 µm) such that the thickness after curing was 40 µm, and then cured for three or five minutes at 150°C. After leaving for one hour or longer, the sample was cut to a width of 10 mm and the pressure-sensitive adhesive layer side was attached to a SUS plate (available from Paltech) using a roller to prepare a test piece. The test piece was measured for pressure-sensitive adhesive strength (measurement at a width of 10 mm was converted to the indicated unit gf/inch) at a tensile rate of 300 mm/min using a 180° peel test method in accordance with JIS Z0237 using an Orientec RTC-1210 tensile tester. The surface of the film was observed when it was peeled off, and the composition of the pressure-sensitive adhesive remaining on the SUS plate was judged as having adhesive residue. Note that for the examples and comparative examples, samples were prepared by adding 1 mass% of the composition itself and a diluting solvent (heptane), and the viscosities (mPa·s) are shown in the table as viscosity (0%) and viscosity (1%). The viscosity (1%) sample was used for coating (Table 1).

### (Dynamic Viscoelasticity) *Examples 1 to 7

Each composition was applied to a release liner coated via fluorosilicone release coating such that the thickness after curing was approximately 100 µm, then cured at 150°C for three minutes. Alternatively, each composition was applied to a release liner coated via fluorosilicone release coating such that the thickness after curing was approximately 280 µm, then cured at 150°C for 15 minutes. Five or more of the pressure-sensitive adhesive films for 100 µm and two for 280 µm were overlaid to obtain a film sample with a thickness of at least 500 µm, with both surfaces sandwiched by a release liner. The film was cut to a diameter of 8 mm and adhered to the parallel plate probe of a dynamic viscoelastic device (DMA; MCR301 available from Anoton Paar) and then was measured. The measurement conditions were within a range of - 70°C to 250°C, the measurements were carried out at a frequency of 1 Hz and a temperature increase rate of 3°C/minute, and the loss factor (tan δ), storage elastic modulus G', and loss elastic modulus G" were measured (units: MPa). The storage elastic modulus G' at 25°C and -20°C is shown in Table 2. Furthermore, the glass transition temperature (Tg) of each pressure-sensitive adhesive film was determined from the peak value of the loss factor (tan δ) and is also shown in Table 2.

[Pressure-sensitive adhesive force: Ball tack value] The pressure-sensitive adhesive sheet made in the same way as above was placed on a slope at an angle of 30° from the horizontal direction, and a specified stainless steel ball was rolled over it three times from above. The ball tack value was the largest of the ball numbers whose rolling distance on the pressure-sensitive adhesive sheet was within 10 cm at least two out of three times.

### (High Temperature Retention) *Examples 1 to 7

The silicone pressure-sensitive adhesive composition was coated on a polyimide resin film such that the thickness was 40 µm, and then dried at 150°C for three or five minutes to prepare an adhesive film. The composition was pasted on a SUS plate, and a 200 g weight was hung at the bottom of the SUS plate and aged in an oven at 200°C for 30 minutes. The distance that the SUS plate moved against the polyimide resin film after aging was measured.

Materials of the curing-reactive organopolysiloxane compositions are shown in Table 1. Note that the viscosity or plasticity of each component was measured at room temperature (25°C) using the following method.

### [Viscosity]

Viscosity (mPa-s) is a value measured using a rotational viscometer in accordance with JIS K7117-1.

The following silicone components and the like were used for each component in the table. A xylene solution of the silicone resin in component (C) was added to a pre-mixed mixture of component (A) and component (B), and the xylene was removed under reduced pressure. Note that in Table 1 and Table 2, the ratio of the number of moles of silicon-bonded hydrogen atoms in component (B) to the number of moles of aliphatic unsaturated carbon-carbon bond-containing groups in components (A) and (D) is described as the SiH/Vi ratio.

### Curing Conditions in Examples 8 and 9

Examples 8 and 9 are curing-reactive silicone pressure-sensitive adhesive compositions containing a photoactive hydrosilylation-reaction catalyst. In evaluating "pressure-sensitive adhesive strength measurement, film surface," "dynamic viscoelasticity," and "high temperature retention," instead of the above heat curing conditions at 150°C, the curing conditions were as follows: ultraviolet rays with a 365 nm wavelength were irradiated from the following UV light source such that the integrated light intensity was 2 J/cm², and curing was performed at 60°C for a certain period of time.

Light Source: UV LED spot light: ULEDN-101 (NS-Lighting Co. Ltd.) Wavelength: 365 nm

Example 8: The same method as above was used for evaluation except that irradiation of ultraviolet rays with a 365 nm wavelength at 2 J/cm² and curing at 60°C for five minutes were performed.

Example 9: The same method as above was used for evaluation except that irradiation of ultraviolet rays with a 365 nm wavelength at 2 J/cm² and curing at 60°C for 10 minutes were performed.

### (Component A1)

Alkenyl group-containing polysiloxane expressed by the following formula (amount of vinyl groups: 1.54 mass%)

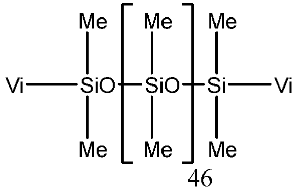

Alkenyl group-containing polysiloxane expressed by the following formula (amount of vinyl groups: 6.3 mass%)

### (Component A2)

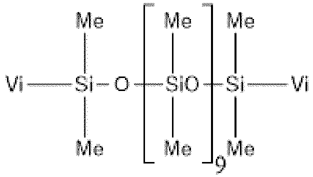

### (Component B1)

Polysiloxane-containing SiH group expressed by the following formula (amount of silicon atom-bonded hydrogen atoms: 0.039 mass%)

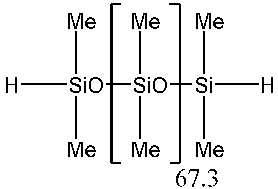

### (Component B2)

Polysiloxane-containing SiH group expressed by the following formula (amount of silicon atom-bonded hydrogen atoms: 0.125 mass%)

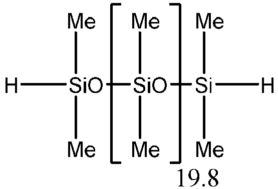

### (Component B3)

Polysiloxane-containing SiH group expressed by the following formula (amount of silicon atom-bonded hydrogen atoms: 0.125 mass%)

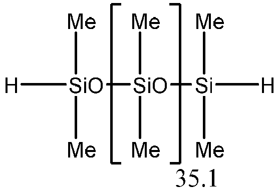

### (Component C1)

MQ silicone resin containing a (CH₃)₃SiO_{1/2} unit, SiO_{4/2} unit, and hydroxyl group, having a weight average molecular weight (Mw) of 4500 as calculated based on polystyrene, and an OH amount of 4.5 mol% (1.0 mass%), Xylene solution (solid content: 70 mass%)

### (Component C')

MQ silicone resin containing a (CH₃)₃SiO_{1/2} unit, SiO_{4/2} unit, and hydroxyl group, having a weight average molecular weight (Mw) of 6500 as calculated based on polystyrene, and an OH amount of 4.5 mol% (1.0 mass%), Xylene solution (solid content: 70 mass%)

### (Component D1)

Alkenyl silicone having hexenyl groups on both ends and a hexenyl group on a side chain, in which the viscosity is 100 mPa·s and the amount of vinyl groups is 2.7 mass%

### (Component D2)

Organopolysiloxane (amount of vinyl groups: 2.90 mass%) expressed by:

(Me₂ViSiO_{1/2})_{0.08}(Me₃SiO_{1/2})_{0.43}(SiO_{4/2})_{0/49}

### (Component D3)

Alkenyl silicone having a vinyl group on a molecular side chain, in which the viscosity is 10,000 mPa·s and the amount of vinyl groups is 1.23 mass%
· "(E1) Platinum catalyst" in Examples 1 to 7 and Comparative Examples 1 to 2:
   Platinum-1,3-divinyl-1,1,3,3-tetramethyldisiloxane complex
   Table 1 lists the platinum metal content concentrations (ppm) thereof.
· "(E2) Photoactive platinum catalyst" in Examples 8 and 9:
   (Methylcyclopentadienyl) trimethylplatinum (IV) complex (curing-reaction catalyst that causes a hydrosilylation reaction to proceed by ultraviolet (UV) irradiation)
   Table 2 lists the added amounts (mass%) and platinum metal concentrations (ppm).
   · (F) Diallyl maleate (= diallyl malate) was used as a curing retarder.

**[Table 1-1]**

| Component | Example 1 | Example 2 | Example 3 | Example 4 | Example 5 |
|---|---|---|---|---|---|
| A1 | 6.39 | 6.75 | 12.74 | 6.71 | 6.12 |
| A2 | | | | | |
| B1 | 20.04 | 21.16 | | 21.04 | 19.19 |
| B2 | | | | | |
| B3 | | | 15.17 | | |
| C1 | 68.71 | 66.97 | 66.97 | 67.76 | 70.6 |
| C' | | | | | |
| D1 | 4.74 | 5.0 | 5.0 | | |
| D2 | | | | 4.37 | 3.98 |
| D3 | | | | | |
| F | 0.12 | 0.12 | 0.13 | 0.13 | 0.12 |
| Total | 100 | 100 | 100 | 100 | 100 |
| (E1) Platinum catalyst (ppm) | 10 | 10 | 10 | 10 | 10 |
| SiH/Vi ratio | 0.83 | 0.83 | 0.83 | 0.82 | 0.82 |
| Viscosity (0%) mPa·s | 98,700 | 50,850 | 41,775 | 339,000 | > 750,000 |
| Viscosity (1%) mPa·s | 17,813 | 11,100 | 9,450 | 47,700 | 115,500 |
| Glass transition temperature (Tg) °C | 12.7 | 3.20 | 14.0 | 22.0 | 32.7 |
| Film surface | No adhesive residue | No adhesive residue | No adhesive residue | No adhesive residue | No adhesive residue |
| Pressure-sensitive adhesive strength gf/inch | 1600 | 1125 | 1075 | 1900 | 2250 |
| Tack | 32 | 31 | 32 | 32 | 10 |
| High temperature retention mm | < 0.05 | < 0.05 | < 0.05 | < 0.05 | < 0.05 |

**[Table 1-2]**

| Component | Example 6 | Example 7 | Comparative Example 1 | Comparative Example 2 |
|---|---|---|---|---|
| A1 | | 6.0 | | |
| A2 | 7.08 | | 11.12 | 10.02 |
| B1 | | 21.23 | | |
| B2 | 15.66 | | 25.46 | 22.95 |
| B3 | | | | |
| C1 | 68.22 | 63.00 | | |
| C' | | 5.00 | 56.7 | 60.97 |
| D1 | | 4.62 | 6.56 | 5.91 |
| D2 | | | | |
| D3 | 8.89 | | | |
| F | 0.15 | 0.15 | 0.17 | 0.15 |
| Total | 100 | 100 | 100 | 100 |
| (E1) Platinum catalyst (ppm) | 10 | 10 | 10 | 10 |
| SiH/Vi ratio | 0.89 | 0.88 | 0.94 | 0.94 |
| Viscosity (0%) mPa·s | 36,450 | 80,550 | 13,744 | 48,525 |
| Viscosity (1%) mPa·s | 10,125 | 16,200 | 4,350 | 11,625 |
| Glass transition temperature (Tg) °C | 28.5 | 9.92 | 19.3 | 41.1 |
| Film surface | No adhesive residue | No adhesive residue | No adhesive residue | Adhesive residue present |
| Pressure-sensitive adhesive strength qf/inch | 1375 | 1325 | 750 | 1200 |
| Tack | 26 | 32 | 18 | 15 |
| High temperature retention mm | < 0.05 | < 0.05 | < 0.05 | < 0.05 |

**[Table 2]**

| Component | Example 8 | Example 9 |
|---|---|---|
| C1 | 67.05 | 69.07 |
| A1 | 12.75 | 7.30 |
| B3 | 15.19 | 18.87 |
| D1 | 5.01 | 4.76 |
| F | 0.00106 (10 ppm) | 0.00101 (10 ppm) |
| Total | 100.00 | 100.00 |
| (E2) Photoactive platinum catalyst (ppm) | 0.0033 (20 ppm) | 0.0033 (20 ppm) |
| SiH/Vi ratio | 0.92 | 0.83 |
| Viscosity (0%) mPa·s | 20663 | 64125 |
| Viscosity (1%) mPa s | | 13125 |
| Glass transition temperature (Tg) °C | -13.45 | 0.61 |
| Film surface | No adhesive residue | No adhesive residue |
| Pressure-sensitive adhesive strength (Kgf/inch) | 950 | 1500 |
| Tack | 32 | 32 |
| High temperature retention mm | < 0.05 | < 0.05 |

### [Summary]

The silicone pressure-sensitive adhesive compositions according to Examples 1 to 9 use (C1) a relatively low molecular weight MQ silicone resin, which has a viscosity range that is sufficient for practical coating, even if the composition is solvent-free or a low solvent-type. Moreover, the curability and pressure-sensitive adhesive properties of the resulting pressure-sensitive adhesive layer are sufficiently excellent for practical use. In particular, the tack and pressure-sensitive adhesive properties of the pressure-sensitive adhesive layer are excellent. This was also true for Examples 1 to 7, which used a heat-curing hydrosilylation-reaction catalyst, and Examples 8 and 9, which used a photoactive hydrosilylation-reaction catalyst. In contrast, when only high molecular weight silicone resin (C') was used, in a composition with a certain degree of high pressure-sensitive adhesive strength, adhesive residue of a cured product on an adherend occurred, and a cured product without adhesive residue has low pressure-sensitive adhesive strength and tack, making it impossible to achieve sufficient pressure-sensitive adhesive properties for practical use.

## Claims

1. A silicone pressure-sensitive adhesive composition, comprising:
(A) a straight-chain or branched-chain organopolysiloxane having at least two aliphatic unsaturated carbon-carbon bond-containing groups only at ends of a molecular chain and a degree of siloxane polymerization within a range of 5 to 10,000;
(B) a straight-chain organohydrogenpolysiloxane having silicon-bonded hydrogen atoms only at both ends of a molecular chain;
(C) an organopolysiloxane resin, where the total amount of hydroxyl groups and hydrolyzable groups with regard to all silicon atoms in a molecule is 9 mol% or less, and the weight average molecular weight (Mw) measured as calculated based on polystyrene by gel permeation chromatography (GPC) using tetrahydrofuran (THF) as a solvent is less than 5000;
(D) an organopolysiloxane having one or more aliphatic unsaturated carbon-carbon bond-containing groups at locations other than ends of a molecular chain of the straight-chain or branched-chain siloxane, and having at least three or more aliphatic unsaturated carbon-carbon bond groups in a molecule; and
(E) a hydrosilylation-reaction catalyst, wherein
the amount of organic solvent with respect to the entire composition is less than 20 mass%, and
the glass transition temperature (Tg) of a pressure-sensitive adhesive layer obtained by curing the composition is 50°C or lower.

2. The silicone pressure-sensitive adhesive composition according to claim 1, wherein a component containing a silicon-bonded hydrogen atom other than component (B) is substantially not included in the silicone pressure-sensitive adhesive composition, and the ratio (molar ratio) of the mass of silicon atom-bonded hydrogen atoms in component (B) with respect to the total amount of substances of the aliphatic unsaturated carbon-carbon bond-containing group included in the composition is within a range of 0.10 to 1.30.

3. The silicone pressure-sensitive adhesive composition according to claim 1 or 2, wherein component (C) is (C1) an organopolysiloxane resin in which the amount of vinyl (CH₂=CH-) moieties in the aliphatic unsaturated carbon-carbon bond-containing group in a molecule are at least less than 0.1 mass%.

4. The silicone pressure-sensitive adhesive composition according to any one of claims 1 to 3, wherein when the total amount of components (A) to (D) is 100 parts by mass,
the total amount of components (A) and (B) is within a range of 10 to 80 parts by mass,
the amount of components (C) is within a range of 10 to 80 parts by mass, and
the amount of component (D) is within a range of 0.01 to 20 parts by mass.

5. The silicone pressure-sensitive adhesive composition according to any one of claims 1 to 4, wherein component (D) is the following component (D1), component (D2), or a mixture thereof:
(D1) a straight-chain or branched-chain organopolysiloxane having at least three aliphatic unsaturated carbon-carbon bond-containing groups at a molecular side chain and a degree of siloxane polymerization within a range of 5 to 5,000;
(D2) an organopolysiloxane resin that at least contains in a molecule a siloxane unit (MVi unit) expressed by (Alk) R'₂SiO_{1/2} (where Alk independently represents an aliphatic unsaturated carbon-carbon bond-containing group and R' independently represents an aliphatic unsaturated carbon-carbon bond-non-containing group) and a siloxane unit (Q unit) expressed by SiO_{4/2}, and in which the amount of vinyl (CH₂ = CH-) moieties in the aliphatic unsaturated carbon-carbon bond-containing group in the molecule is 0.1 mass% or more.

6. The silicone pressure-sensitive adhesive composition according to any one of claims 1 to 5, wherein the pressure-sensitive adhesive force of the pressure-sensitive adhesive layer having a thickness of 40 µm, obtained by curing the composition, as measured at a tensile rate of 300 mm/min using a 180° peel test method in accordance with JIS Z0237 with respect to a SUS substrate is within a range of 5 to 2500 gf/inch.

7. A pressure-sensitive adhesive layer obtained by curing the silicone pressure-sensitive adhesive composition according to any one of claims 1 to 6.

8. A laminate body, comprising a pressure-sensitive adhesive layer obtained by curing the silicone pressure-sensitive adhesive composition according to any one of claims 1 to 6, on a film-like substrate.

9. The laminate body according to claim 7, wherein a release layer for the pressure-sensitive adhesive layer is provided on one or two or more film-like substrates.

10. The laminate body according to claim 8 or 9, comprising:
a film-like substrate;
a first release layer formed on the film-like substrate;
a pressure-sensitive adhesive layer formed by coating and curing the silicone pressure-sensitive adhesive composition according to any one of claims 1 to 6 on the release layer; and
a second release layer laminated on the pressure-sensitive adhesive layer.

11. An elastic pressure-sensitive adhesive member obtained by curing the pressure-sensitive adhesive layer-forming organopolysiloxane composition according to any one of claims 1 to 6.

12. An electronic apparatus or electrical device, comprising the elastic pressure-sensitive adhesive member according to claim 11.
